# EUROPEAN PATENT APPLICATION

(11) **EP 4 169 997 A1**
(43) Date of publication of application: **26.04.2023**
(21) Application number: 21826327.5
(22) Date of filing: 03.06.2021
(51) Int. Cl.: C09J 175/04, B32B 27/00, B32B 27/40, C09J 5/04, C09J 11/04, C09J 11/06

(54) **ADHESIVE AGENT, LAMINATE, METHOD FOR MANUFACTURING LAMINATE, AND PACKAGING MATERIAL**

(30) Priority: 18.06.2020 JP 2020105190
(71) Applicant: DIC Corporation, Tokyo 174-8520 (JP)
(72) Inventor: TOMITA, Daiki, Tokyo 174-8520 (JP); HONMA, Takao, Tokyo 174-8520 (JP); AKITA, Koji, Tokyo 174-8520 (JP)
(74) Representative: Gerauer, Marc Philippé
(86) International application number: PCT/JP2021/021121
(87) International publication number: WO 2021/256270

(57) **Abstract**

Provided are a two-component curable adhesive which can be aged at room temperature and has favorable adhesiveness to various base materials, a laminate in which the adhesiveness between a base material and an adhesive is excellent even when aged at room temperature, and a packaging material including the laminate. The two-component curable adhesive includes a polyisocyanate composition (X) including a polyisocyanate compound (A) and a polyol composition (Y) including a polyol (B), in which a viscosity of the polyol composition at 50°C is 20 mPa·s or more and 180 mPa·s or less.

## Description

### TECHNICAL FIELD

The present invention relates to an adhesive, a laminate obtained using the adhesive, a method for producing a laminate, and a packaging material.

### BACKGROUND ART

Conventionally, laminated composite films obtained by bonding various plastic films, metal foils, and the like using an adhesive have been widely used in the field of packaging. As this laminating adhesive, two-component curable adhesives including an organic solvent in which polyester polyol, polyether polyol, polyurethane polyol, or an arbitrary mixture thereof and an organic polyisocyanate compound are blended have been widely used. However, in recent years, from the viewpoint of improvement in a working environment, emission regulation of a volatile organic compound (VOC) to the atmosphere and the like, the transition from an organic solvent-based adhesive to a solvent-free adhesive progresses.

Generally, when a laminate is obtained using a two-component curable adhesive, a step of bonding base materials using an adhesive obtained by mixing two liquid components and then curing the adhesive (aging step) is provided. It usually takes several days to perform the aging step at about 40 to 50°C (PTLs 1 and 2), but recently, attempts of further decreasing temperature and time for the aging step have been made (PTL 3).

### CITATION LIST

### PATENT LITERATURE

PTL 1: JP2006-057089A
PTL 2: JP2011-162579A
PTL3: JP2014-159548A

### SUMMARY OF INVENTION

### TECHNICAL PROBLEM

However, further decreasing temperature and time for the aging step is synonymous with enhancing the reactivity of two liquid components. The viscosity of the adhesive is likely to precipitously increase immediately after mixing the two liquid components, and the adhesive is difficult to be sufficiently wet and spread over a base material, which causes a decrease in adhesiveness between the base material and the adhesive. The invention has been made in view of such circumstances, and an object thereof is to provide a two-component curable adhesive which can be aged at room temperature and has favorable adhesiveness to various base materials.

### SOLUTION TO PROBLEM

The present inventors have found that the above problems can be solved by a two-component curable adhesive including a polyisocyanate composition (X) including a polyisocyanate compound (A) and a polyol composition (Y) including a polyol (B), in which a viscosity of the polyol composition at 50°C is 20 mPa·s or more and 180 mPa·s or less.

That is, the invention relates to a two-component curable adhesive including a polyisocyanate composition (X) including a polyisocyanate compound (A) and a polyol composition (Y) including a polyol (B), in which a viscosity of the polyol composition at 50°C is 20 mPa·s or more and 180 mPa·s or less.

### ADVANTAGEOUS EFFECTS OF INVENTION

According to the adhesive of the invention, it is possible to provide an adhesive which can be aged at room temperature and is excellent in adhesiveness to various base materials.

### DESCRIPTION OF EMBODIMENTS

### <Adhesive>

An adhesive of the invention is a two-component curable adhesive including a polyisocyanate composition (X) including a polyisocyanate compound (A) and a polyol composition (Y) including a polyol (B), in which a viscosity of the polyol composition at 50°C is 20 mPa·s or more and 180 mPa·s or less. Hereinafter, the adhesive of the invention will be specifically described.

### (Polyisocyanate Composition (X))

The polyisocyanate composition (X) includes a polyisocyanate compound (A). The polyisocyanate compound (A) is not particularly limited and known polyisocyanate compounds can be used, and examples thereof include polyisocyanates having an aromatic structure in the molecular structure such as tolylene diisocyanate, diphenylmethane diisocyanate, polymeric diphenylmethane diisocyanate, 1,5-naphthalene diisocyanate, triphenylmethane triisocyanate, and xylylene diisocyanate, and compounds in which a part of NCO group of these polyisocyanates is modified with carbodiimide;
polyisocyanates having an alicyclic structure in the molecular structure such as isophorone diisocyanate, 4,4'-methylenebis(cyclohexyl isocyanate), and 1,3-(isocyanatomethyl)cyclohexane;
linear aliphatic polyisocyanates such as 1,6-hexamethylene diisocyanate, 1,5-pentamethylene diisocyanate, lysine diisocyanate, and trimethylhexamethylene diisocyanate, and compounds in which a part of NCO group of these polyisocyanates is modified with carbodiimide;
isocyanurate forms of these polyisocyanates; allophanate forms derived from these polyisocyanates; biuret forms derived from these polyisocyanates; adduct forms obtained by modifying these polyisocyanates with trimethylolpropane; and polyurethane polyisocyanates which are reaction products of these polyisocyanates and a polyol.

When a polyurethane polyisocyanate is used as the polyisocyanate compound (A), from the viewpoint of a balance between cohesion and flexibility of a coating film of the adhesive, the polyurethane polyisocyanate is preferably obtained by reacting the polyisocyanate and the polyol described above at a ratio of an equivalent ratio [NCO]/[OH] of an isocyanate group to a hydroxyl group of 1.2 to 5.0.

Examples of the polyol used for preparation of the polyurethane polyisocyanate include linear aliphatic glycols such as ethylene glycol, propylene glycol, 1,3-propanediol, 1,4-butanediol, 1,5-pentanediol, 3-methyl-1,5-pentanediol, 1,6-hexanediol, neopentyl glycol, methylpentanediol, dimethylbutanediol, butylethylpropanediol, diethylene glycol, triethylene glycol, tetraethylene glycol, dipropylene glycol, tripropylene glycol, and bishydroxyethoxybenzene;
alicyclic glycols such as 1,4-cyclohexanediol and 1,4-cyclohexanedimethanol;
trifunctional or tetrafunctional aliphatic alcohols such as glycerin, trimethylolpropane, and pentaerythritol;
bisphenols such as bisphenol A, bisphenol F, hydrogenated bisphenol A, and hydrogenated bisphenol F;
dimer diols;
polyether polyols obtained by addition-polymerizing an alkylene oxide, such as ethylene oxide, propylene oxide, butylene oxide, styrene oxide, epichlorohydrin, tetrahydrofuran, or cyclohexylene, in the presence of polymerization initiator such as the glycol or the trifunctional or tetrafunctional aliphatic alcohol;
a polyester polyol (1) which is a reaction product of a polyester obtained by ring-opening polymerization reaction of a cyclic ester compound such as propiolactone, butyrolactone, ε-caprolactone, α-valerolactone, or β-methyl-σ-valerolactone, and the glycol or the trifunctional or tetrafunctional aliphatic alcohol;
a polyester polyol (2) obtained by reacting a polyol such as the linear aliphatic glycol, the alicyclic glycol, the dimer diol, the bisphenol, or the polyether polyol, and a polycarboxylic acid;
a polyester polyol (3) obtained by reacting the trifunctional or tetrafunctional aliphatic alcohol and a polycarboxylic acid;
a polyester polyol (4) obtained by reacting a difunctional polyol, the trifunctional or tetrafunctional aliphatic alcohol, and a polycarboxylic acid;
a polyester polyol (5) which is a polymer of hydroxyl acid such as dimethylol propionic acid or castor oil fatty acid;
a mixture of the polyester polyol (1), (2), (3), (4), or (5) and a polyether polyol; and castor oil-based polyols such as castor oil, hardened castor oil which is a hydrogenated product of castor oil, and alkylene oxide 5 to 50 mole adducts of castor oil, and these can be used singly or in combination of a plurality of kinds thereof.

Examples of the polycarboxylic acid used for production of the polyester polyol (2), (3), or (4) include acyclic aliphatic dicarboxylic acids such as succinic acid, adipic acid, azelaic acid, sebacic acid, dodecanedicarboxylic acid, maleic anhydride, and fumaric acid;
alicyclic dicarboxylic acids such as 1,3-cyclopentanedicarboxylic acid and 1,4-cyclohexanedicarboxylic acid; aromatic dicarboxylic acids such as terephthalic acid, isophthalic acid, phthalic acid, 1,4-naphthalenedicarboxylic acid, 2,5-naphthalenedicarboxylic acid, 2,6-naphthalenedicarboxylic acid, naphthalic acid, biphenyldicarboxylic acid, and 1,2-bis(phenoxy)ethane-p,p'-dicarboxylic acid;
anhydrides or ester-forming derivatives of these aliphatic or aromatic dicarboxylic acids; and
polybasic acids such as p-hydroxybenzoic acid, p-(2-hydroxyethoxy)benzoic acid, and ester-forming derivatives, dimer acids, etc., of these dihydroxycarboxylic acids.

From the viewpoint of excellent reactivity and exhibiting favorable adhesiveness even in the case of curing at room temperature, the polyisocyanate compound (A) preferably includes an aromatic polyisocyanate, particularly, diphenylmethane diisocyanate or a derivative thereof, or a polyurethane polyisocyanate (A1) which is a reaction product of diphenylmethane diisocyanate and a polyol.

From the viewpoint of excellent adhesiveness to a metal base material such as an aluminum foil or an inorganic deposition layer such as silica or alumina, the polyisocyanate compound (A) preferably includes a polyurethane polyisocyanate (A2) which is a reaction product of an aromatic polyisocyanate and a polyester polyol. The polyester polyol used in synthesis of the polyurethane polyisocyanate (A2) preferably includes an aromatic polycarboxylic acid or a derivative thereof as a raw material.

The viscosity of the polyisocyanate composition (X) at 50°C is preferably 200 mPa s or more and 3000 mPa s or less, and more preferably 300 mPa s or more and 1500 mPa s or less. When the viscosity of the polyisocyanate composition (X) is in this range, the polyisocyanate composition (X) is not immediately mixed with the polyol composition (Y) described below, and it takes time to achieve a uniformly mixed state. During the time until the uniformly mixed state is achieved, the reaction between the polyisocyanate composition (X) and the polyol composition (Y) proceeds only locally, and a state where the viscosity of the polyol composition (X) is low can be maintained. Therefore, the polyol composition (X) can be sufficiently wet and spread over the base material, and an adhesive more excellent in adhesiveness to the base material can be obtained. Note that, the viscosity of the polyisocyanate composition (X) in the present application is a value measured using a rotational type viscometer under the conditions of cone plate: 1° × diameter 50 mm, shear rate: 100 sec⁻¹, and 50°C ± 1°C.

The polyisocyanate composition (X) having an isocyanate content ratio as measured by a titration method (using di-n-butylamine) of 5 to 20% by mass is preferable.

### (Polyol Composition (Y))

The polyol composition (Y) used in the adhesive of the invention includes a polyol (B) and has a viscosity at 50°C of 20 mPa·s or more and 180 mPa·s or less. Such a polyol composition (X) has extremely favorable wettability to various base materials such as a plastic film, an aluminum foil, an aluminum deposition layer, and an inorganic deposition layer, and can be sufficiently wet and spread before the reaction with the polyisocyanate composition (X) is started to increase the viscosity of the adhesive layer, and adhesiveness between the adhesive layer and the base material becomes stronger by an interaction between the polyol composition (Y) and, for example, a functional group present on the surface of a metal layer or a polyester film. That is, the adhesive of the invention can be aged at room temperature and is excellent in adhesiveness to various base materials. Note that, the viscosity of the polyol composition (Y) in the present specification is a value measured using a rotational type viscometer under the conditions of cone plate: 1° × diameter 50 mm, shear rate: 100 sec⁻¹, and 50°C ± 1°C.

Examples of the method of adjusting the viscosity of the polyol composition (Y) include a method in which polyols (B) described below having a viscosity at 50°C of 20 mPa s or more and 180 mPa·s or less are used singly or in combination of a plurality of kinds thereof, a method of using a polyol (B) having a viscosity of more than 180 mPa s and a polyol (B) having a viscosity of 180 mPa s or less in combination, and a method of adjusting the viscosity using a plasticizer.

### (Polyol (B))

Examples of the polyol (B) used in the invention include glycols such as ethylene glycol, propylene glycol, 1,3-propanediol, 1,4-butanediol, 1,5-pentanediol, 3-methyl-1,5-pentanediol, 1,6-hexanediol, neopentyl glycol, methylpentanediol, dimethylbutanediol, butylethylpropanediol, diethylene glycol, triethylene glycol, tetraethylene glycol, dipropylene glycol, tripropylene glycol, bishydroxyethoxybenzene, 1,4-cyclohexanediol, 1,4-cyclohexanedimethanol, and triethylene glycol; trifunctional or tetrafunctional aliphatic alcohols such as glycerin, trimethylolpropane, and pentaerythritol; bisphenols such as bisphenol A, bisphenol F, hydrogenated bisphenol A, and hydrogenated bisphenol F; dimer diols; polyether polyols obtained by addition-polymerizing an alkylene oxide, such as ethylene oxide, propylene oxide, butylene oxide, styrene oxide, epichlorohydrin, tetrahydrofuran, or cyclohexylene, in the presence of polymerization initiator such as the glycol or the trifunctional or tetrafunctional aliphatic alcohol; a polyether urethane polyol in which the molecular weight of the polyether polyol is further increased with the aromatic or aliphatic polyisocyanate; a polyester polyol (1) which is a reaction product of a polyester obtained by ring-opening polymerization reaction of a cyclic ester compound such as propiolactone, butyrolactone, ε-caprolactone, σ-valerolactone, or β-methyl-σ-valerolactone, and the polyhydric alcohol such as the glycol, the glycerin, the trimethylolpropane, or the pentaerythritol; a polyester polyol (2) obtained by reacting a difunctional polyol such as the glycol, the dimer diol, or the bisphenol, and a polycarboxylic acid; a polyester polyol (3) obtained by reacting the trifunctional or tetrafunctional aliphatic alcohol and a polycarboxylic acid; a polyester polyol (4) obtained by reacting a difunctional polyol, the trifunctional or tetrafunctional aliphatic alcohol, and a polycarboxylic acid; a polyester polyol (5) which is a polymer of hydroxyl acid such as dimethylol propionic acid or castor oil fatty acid; a polyester polyether polyol obtained by reacting the polyester polyols (1) to (5), the polyether polyol, and an aromatic or aliphatic polyisocyanate; a polyester polyurethane polyol obtained by increasing the molecular weight of the polyester polyols (1) to (5) with an aromatic or aliphatic polyisocyanate; castor oil-based polyols such as castor oil, dehydrated castor oil, hardened castor oil which is a hydrogenated product of castor oil, alkylene oxide 5 to 50 mole adducts of castor oil; and mixtures thereof.

Herein, examples of the polycarboxylic acid include aliphatic dicarboxylic acids such as succinic acid, adipic acid, azelaic acid, sebacic acid, dodecane dicarboxylic acid, maleic anhydride, fumaric acid, 1,3-cyclopentane dicarboxylic acid, and 1,4-cyclohexane dicarboxylic acid; aromatic dicarboxylic acids such as terephthalic acid, isophthalic acid, orthophthalic acid, 1,4-naphthalene dicarboxylic acid, 2,5-naphthalene dicarboxylic acid, 2,6-naphthalene dicarboxylic acid, naphthalic acid, biphenyl dicarboxylic acid, and 1,2-bis(phenoxy)ethane-p,p'-dicarboxylic acid; anhydrides or ester-forming derivatives of these aliphatic or aromatic dicarboxylic acids; and polybasic acids such as p-hydroxybenzoic acid, p-(2-hydroxyethoxy)benzoic acid, and ester-forming derivatives of these dihydroxy carboxylic acids, and a dimer acid.

The polyol (B) preferably includes a polyol compound having a secondary hydroxyl group. Since the secondary hydroxyl group has lower reactivity than a primary hydroxyl group, the polyol compound is likely to be wet and spread over the base material before the start of reaction with the polyisocyanate composition (X). Examples of the polyol compound having a secondary hydroxyl group include polyether polyols obtained by adding propylene oxide in the presence of a polymerization initiator such as an aliphatic alcohol.

### (Amine Compound (C))

The polyol composition (Y) also preferably includes an amine compound (C). Examples of the amine compound (C) include an amine compound (C1) having a plurality of hydroxyl groups, an amine compound (C2) having an amino group, and a tertiary amine compound (C3) having no active hydrogen group.

Examples of the amine compound (C1) include polypropylene glycol ethylenediamine ether, a propylene oxide adduct of triethanolamine, N-ethyldiethanolamine, N-methyl-N-hydroxyethyl-N-hydroxyethoxy ethylamine, pentakishydroxypropyl diethylene triamine, tetrakishydroxypropyl ethylenediamine, N,N,N',N'-tetrakis(2-hydroxypropyl)ethylenediamine, triethanolamine, and amino group-containing aspartate ester.

The hydroxyl group of the amine compound (C1) is preferably a secondary or tertiary hydroxyl group. As such, both of initial cohesion and sufficient pot life can be achieved. Furthermore, in the case of separately applying a polyisocyanate (X) described below and the polyol composition (Y), a mixed layer of (X) and (Y) after pressure-bonding is not inhibited.

The amino group of the amine compound (C2) is an NH₂ group or an NHR group (R represents an alkyl group or aryl group which may have a functional group). Examples of the amine compound (C2) include methylenediamine, ethylenediamine, isophorone diamine, 3,9-dipropaneamine-2,4,8,10-tetraoxaspiroundecane, lysine, phenylenediamine, 2,2,4-trimethyl hexamethylene diamine, tolylenediamine, hydrazine, piperazine, hexamethylene diamine, propylene diamine, dicyclohexylmethane-4,4-diamine, 2-hydroxyethyl ethylenediamine, di-2-hydroxyethyl ethylenediamine, di-2-hydroxyethyl propylene diamine, 2-hydroxypropyl ethylenediamine, or di-2-hydroxypropylethylenediamine, polypropylene glycol)diamine, polypropylene glycol)triamine, polypropylene glycol)tetraamine, 1,2-diaminopropane, 1,3-diaminopropane,
1,4-diaminobutane, 1,5-diaminopentane, 1,6-diaminohexane, 1,7-diaminoheptane, 1,8-diaminooctane, 1,9-diaminononane, 1,10-diaminodecane, and the like; benzylamine, diethylene triamine, dipropylene triamine, triethylene tetramine, tripropylene tetramine, tetraethylene pentamine, tetrapropylene pentamine, pentaethylene hexamine, nonaethylene decamine, trimethylhexamethylene diamine, and the like; tetra(aminomethyl)methane, tetrakis(2-aminoethylaminomethyl)methane, 1,3-bis(2'-aminoethylamino)propane, triethylene-bis(trimethylene)hexamine, bis(3-aminoethyl)amine, bishexamethylene triamine, and the like; 1,4-cyclohexanediamine, 4,4'-methyelene biscyclohexylamine, 4,4'-isopropylidene biscyclohexylamine, norbornane diamine,
bis(aminomethyl)cyclohexane, diaminodicyclohexylmethane, isophorone diamine, menthene diamine, and the like; bis(aminoalkyl)benzene, bis(aminoalkyl)naphthalene, bis(cyanoethyl)diethylene triamine, ortho-xylylenediamine, meta-xylylenediamine, paraxylylenediamine, phenylenediamine, naphthylenediamine, diaminodiphenylmethane, diaminodiethylphenylmethane, 2,2-bis(4-aminophenyl)propane, 4,4'-diaminodiphenyl ether, 4,4'-diaminobenzophenone, 4,4'-diaminodiphenyl ether, 4,4'-diaminodiphenyl sulfone, 2,2'-dimethyl-4,4'-diaminodiphenylmethane, 2,4'-diaminobiphenyl, 2,3'-dimethyl-4,4'-diaminobiphenyl, 3,3'-dimethoxy-4,4'-diaminobiphenyl, bis(aminomethyl)naphthalene, bis(aminoethyl)naphthalene, and the like; N-methylpiperazine, morpholine, 1,4-bis-(8-aminopropyl)-piperazine, piperazine-1,4-diazacycloheptane, 1-(2'-aminoethylpiperazine), 1-[2'-(2"-aminoethylamino)ethyl]piperazine, tricyclodecane diamine, an amine compound (C2-1) having a plurality of amino groups such as polyurea amine which is a reaction product of the various polyamines and the various isocyanate components described above,
primary or secondary alkanolamines (C2-2) such as monoethanolamine, monoisopropanolamine, monobutanolamine, N-methylethanolamine, N-ethylethanolamine, N-methylpropanolamine, diethanolamine, and diisopropanolamine, and
primary or secondary amines (C2-3) such as ethylamine, octylamine, laurylamine, myristylamine, stearylamine, oleylamine, diethylamine, dibutylamine, and distearylamine.

Examples of the tertiary amine compound (C3) having no active hydrogen group include triethylamine, dimethyloctylamine, dimethyldecylamine, dimethyllaurylamine, dimethylmyristylamine, dimethylpalmitylamine, dimethylstearylamine, dimethylbehenylamine, dilaurylmonomethylamine, trioctylamine, triethylenediamine, 2-methyltriethylenediamine, quinuclidine, 2-methylquinuclidine, N,N,N',N'-tetramethylethylenediamine, N,N,N',N'-tetramethylpropylene diamine, N,N,N',N",N"-pentamethyldiethylenetriamine, N,N,N',N",N"-pentamethyl-(3-aminopropyl)ethylenediamine, N,N,N',N",N"-pentamethyl dipropylene triamine, N,N,N',N'-tetramethyl hexamethylene diamine, bis(2-dimethylaminoethyl)ether, dimethylethanolamine, dimethylisopropanolamine, dimethylaminoethoxy ethanol, N,N-dimethyl-N'-(2-hydroxyethyl)ethylenediamine, N,N-dimethyl-N'-(2-hydroxyethyl)propanediamine, bis(dimethylaminopropyl)amine, bis(dimethylaminopropyl)isopropanolamine, 3-quinuclidinol, N,N,N',N'-tetramethylguanidine, 1,3,5-tris(N,N-dimethylaminopropyl)hexahydro-S-triazine, 1,8-diazabicyclo[5.4.0]undecene-7, N-methyl-N'-(2-dimethylaminoethyl)piperazine, N,N'-dimethylpiperazine, dimethylcyclohexylamine, N-methylmorpholine, N-ethylmorpholine, 1-methylimidazole, 1,2-dimethylimidazole, 1-isobutyl-2-methylimidazole, 1-dimethylaminopropylimidazole, N,N-dimethylhexanol amine, N-methyl-N'-(2-hydroxyethyl)piperazine, 1-(2-hydroxyethyl)imidazole, 1-(2-hydroxypropyl)imidazole, 1-(2-hydroxyethyl)-2-methylimidazole, and 1-(2-hydroxypropyl)-2-methylimidazole.

When the polyol composition (Y) includes the amine compound (C), the amine value of the polyol composition (Y) is preferably 1 mgKOH/g or more and 100 mgKOH/g or less. As such, the aging step can be further shortened. The amine value is more preferably 5 mgKOH/g or more and 80 mgKOH/g or less, and further preferably 10 mgKOH/g or more and 60 mgKOH/g or less.

Note that, the amine value in the present specification refers to milligrams of KOH equivalent to the HCl amount necessary for neutralizing 1 g of a sample, is not particularly limited, and can be calculated using a known method. When the chemical structure of the amine compound (C), and, as necessary, the average molecular weight, and the like are known, the amine value can be calculated by (the number of amino groups per one molecule/the average molecular weight) × 56.1 × 1000. When the chemical structure of the amine compound, the average molecular weight, and the like are not known, the amine value can be measured according to a known amine value measuring method, for example, JIS K 7237-1995.

### (Monool Compound (D))

The polyol composition (Y) may include a monool compound (D) having one alcoholic hydroxyl group. The main chain of the monool compound (D) is not particularly limited, and examples thereof include a vinyl resin having one hydroxyl group, an acrylic resin, a polyester, an epoxy resin, and a urethane resin. Furthermore, an aliphatic alcohol, alkyl alkylene glycol, and the like can also be used. The main chain of the monool compound (D) may be linear or branched. The binding position of the hydroxyl group is not particularly limited, but is preferably present at the terminal of the molecular chain. By using the monool compound (D), flexibility can be imparted to a cured coating film of the adhesive, and improvement in seal strength can be expected.

The adhesive of the invention is characterized in that the viscosity of the polyol composition (Y) at 50°C is 20 mPa·s or more and 180 mPa·s or less, but when a polyol (B) having a relatively small molecular weight is used in order to adjust the viscosity of the polyol composition (Y) in this range, a cured coating film of the adhesive may be hardened in some cases. The combined usage of the monool compound (D) is effective, for example, in such a case.

Specific examples of such a monool compound (D) include aliphatic monools such as methanol, ethanol, propanol, butanol, pentanol, hexanol, heptanol, octanol, nonanol, decanol, lauryl alcohol, myristyl alcohol, pentadecanol, cetyl alcohol, heptadecanol, stearyl alcohol, nonadecanol, other alkanols (C20 to 50), oleyl alcohol, and isomers thereof,
alicyclic monools such as cyclohexanol, methylcyclohexanol, 4-butylcyclohexanol, 4-pentylcyclohexanol, 4-hexylcyclohexanol, cyclodecanol, cyclododecanol, cyclopentadecanol, 4-isopropylcyclohexanol, 3,5,5-trimethylcyclohexanol, menthol, 2-norbornanol, borneol, 2-adamantanol, dicyclohexylmethanol, decatol, 2-cyclohexylcyclohexanol, 4-cyclohexylcyclohexanol, 4-(4-propylcyclohexyl)cyclohexanol, 4-(4-pentyl cyclohexyl)cyclohexanol, α-ambrinol, desoxycorticosterone, 11-dehydrocorticosterone, cholesterol, β-sitosterol, campesterol, stigmasterol, brassicasterol, lanosterol, ergosterol, β-cholestanol, testosterone, estrone, digitoxigenin, dehydroepiandrosterone, coprostanol, pregnenolone, epicholestanol, 7-dehydrocholesterol, estradiol benzoate, tigogenin, hecogenin, methandienone, cortisone acetate, stenolon, and isomers thereof,
aromatic-aliphatic monools such as benzyl alcohol, and
polyoxyalkylene monools obtained by subjecting an alkylene oxide such as ethylene oxide, propylene oxide, butylene oxide, or tetrahydrofuran to a ring-opening addition polymerization using an alkyl compound or the like containing one active hydrogen as an initiator.

### (Form of Adhesive)

The adhesive of the invention is used in the form of a solvent-free type. Note that, a "solvent-free type" adhesive in the present specification refers to the form of the adhesive used in a method, a so-called non-solvent lamination method, in which the polyisocyanate composition (X) and the polyol composition (Y) do not substantially include an organic solvent having high solubility, for example, esters such as ethyl acetate, butyl acetate, and cellosolve acetate, ketones such as acetone, methyl ethyl ketone, isobutyl ketone, and cyclohexanone, ethers such as tetrahydrofuran and dioxane, aromatic hydrocarbons such as toluene and xylene, halogenated hydrocarbons such as methylene chloride and ethylene chloride, dimethyl sulfoxide, and dimethyl sulfonamide, particularly, ethyl acetate or methyl ethyl ketone, the adhesive is applied to a base material, and then the base material is bonded to another base material without performing a step of evaporating the solvent by heating with an oven or the like. When constituents of the polyisocyanate composition (X) or the polyol composition (Y) remain or an organic solvent used as a reaction medium at the time of production of raw materials of the polyisocyanate composition (X) or the polyol composition (Y) is not completely removed and a trace amount of the organic solvent remains in the polyisocyanate composition (X) or the polyol composition (Y), it is speculated that the organic solvent is not substantially included. Furthermore, when the polyisocyanate composition (X) includes a low-molecular-weight alcohol, the low-molecular-weight alcohol reacts with the polyol composition (Y) to form a part of a coating film, and thus it is not necessary to evaporate the low-molecular-weight alcohol after coating. Therefore, such a form is also regarded as a solvent-free type adhesive, and the low-molecular-weight alcohol is not regarded as an organic solvent.

### (Other Components of Adhesive)

The adhesive of the invention may include components other than the above-described components. These components may be included in any one or both of the polyisocyanate composition (X) and the polyol composition (Y), or may be prepared separately from the polyisocyanate composition (X) and the polyol composition (Y) and mixed with the polyisocyanate composition (X) and the polyol composition (Y) immediately before applying the adhesive. Each component will be described below.

### (Catalyst (E))

The adhesive of the invention can promote curing reaction by using a catalyst as necessary. The catalyst is not particularly limited as long as it promotes the urethane formation reaction of the polyisocyanate composition (X) and the polyol composition (Y), and examples thereof include a metal-based catalyst (E1) and an aliphatic cyclic amide compound (E2).

Examples of the metal-based catalyst (E1) include metal complex-based, inorganic metal-based, and organic metal-based catalysts. Examples of the metal complex-based catalyst include an acetylacetonate salt of a metal selected from the group consisting of Fe (iron), Mn (manganese), Cu (copper), Zr (zirconium), Th (thorium), Ti (titanium), Al (aluminum), and Co (cobalt), for example, iron acetylacetonate, manganese acetylacetonate, copper acetylacetonate, and zirconium acetylacetonate. From the viewpoint of toxicity and catalyst activity, iron acetylacetonate (Fe(acac)₃) or manganese acetylacetonate (Mn(acac)₂) is preferable.

Examples of the inorganic metal-based catalysts include those selected from Sn, Fe, Mn, Cu, Zr, Th, Ti, Al, Co, and the like.

Examples of the organic metal-based catalysts include organic zinc compounds such as zinc octylate, zinc neodecanoate, and zinc naphthenate; organic tin compounds such as stannous diacetate, stannous dioctoate, stannous dioleate, stannous dilaurate, dibutyltin diacetate, dibutyltin dilaurate, dioctyltin dilaurate, dibutyltin oxide, and dibutyltin dichloride; organic nickel compounds such as nickel octylate and nickel naphthenate; organic cobalt compounds such as cobalt octylate and cobalt naphthenate; organic bismuth compounds such as bismuth octylate, bismuth neodecanoate, and bismuth naphthenate; and titanium-based compounds such as tetraisopropyloxy titanate, dibutyltitanium dichloride, tetrabutyl titanate, butoxytitanium trichloride, and titanium chelate complexes having at least one of an aliphatic diketone, an aromatic diketone, and an alcohol having 2 to 10 carbon atoms as a ligand.

Examples of the aliphatic cyclic amide compound (E2) include δ-valerolactam, ε-caprolactam, ω-enantholactam, η-capryl lactam, and β-propiolactam. Among these, ε-caprolactam is more effective in curing acceleration.

These catalysts (E) can be used singly or in combination of two or more kinds thereof. The blending amount of the catalyst (E) is set to preferably 0.001 to 3 parts by mass and more preferably 0.01 to 2 parts by mass, with respect to 100 parts by mass of the total solid content of the polyisocyanate composition (X) and the polyol composition (Y).

### (Pigment)

The adhesive of the invention may include a pigment as necessary. A pigment to be used is not particularly limited, and examples thereof include organic pigments and inorganic pigments such as extender pigments, white pigments, black pigments, gray pigments, red pigments, brown pigments, green pigments, blue pigments, metal powder pigments, light-emitting pigments, and pearl-colored pigments, and plastic pigments described in Toryo Genryou Binran (Paint material handbook), 1970 edition (edited by Japan Paint Manufacturers Association).

Examples of the extender pigments include precipitated barium sulfate, chalk, precipitated calcium carbonate, calcium bicarbonate, white marble, alumina white, silica, hydrated fine powder silica (white carbon), ultrafine anhydrous silica (aerosil), silica sand, talc, precipitated magnesium carbonate, bentonite, clay, kaolin, and ocher.

Specific examples of the organic pigments include various insoluble azo pigments such as benzidine yellow, hansa yellow, and lake red 4R; soluble azo pigments such as lake red C, carmine 6B, and Bordeaux 10; various (copper) phthalocyanine pigments such as phthalocyanine blue and phthalocyanine green; various chlorine dyed lakes such as rhodamine lake and methyl violet lake; various mordant dye pigments such as quinoline lake and fast sky blue; various vat dye pigments such as anthraquinone pigments, thioindigo pigments, and perinone pigments; various quinacridone pigments such as cinquasia red B; various dioxazine pigments such as dioxazine violet; various condensed azo pigments such as chromophthal; and aniline black.

Examples of the inorganic pigments include various chromates such as chrome yellow, zinc chromate, and molybdate orange; various ferrocyan compounds such as Prussian blue; various metal oxides such as titanium oxide, Chinese white, Mapico yellow, iron oxide, red iron oxide, chromium oxide green, and zirconium oxide; various sulfides and selenides such as cadmium yellow, cadmium red, and mercury sulfide; various sulfates such as barium sulfate and lead sulfate; various silicates such as calcium silicate and ultramarine blue; various carbonates such as calcium carbonate and magnesium carbonate; various phosphates such as cobalt violet and manganese violet; various metal powder pigments such as aluminum powder, gold powder, silver powder, copper powder, bronze powder, and brass powder; flake pigments of these metals and mica flake pigments; metallic pigments and pearl pigments such as mica flake pigments coated with metal oxides and mica-like iron oxide pigments; and graphite and carbon black.

Examples of the plastic pigments include "GRANDOLL PP-1000" and "PP-2000S" manufactured by DIC Corporation.

The pigments to be used may be appropriately selected depending on the purpose, and from the viewpoint of excellent durability, weather resistance, and design properties, inorganic oxides such as titanium oxide and Chinese white are preferably used as white pigments, and carbon black is preferably used as a black pigment.

The blending amount of the pigment is, for example, 1 to 400 parts by mass with respect to 100 parts by mass of the total solid content of the polyisocyanate composition (X) and the polyol composition (Y), and is set to more preferably 10 to 300 parts by mass in terms of making adhesiveness and blocking resistance more favorable.

### (Adhesion Promoter)

The adhesive of the invention may include an adhesion promoter. Examples of the adhesion promoter include coupling agents such as a silane coupling agent, a titanate-based coupling agent, and an aluminum-based coupling agent, and an epoxy resin.

Examples of the silane coupling agent include aminosilanes such as γ-aminopropyltriethoxysilane, γ-aminopropyltrimethoxysilane, N-β(aminoethyl)-γ-aminopropyltrimethoxysilane, N-β(aminoethyl)-γ-aminopropyltrimethyldimethoxysilane, and N-phenyl-γ-aminopropyltrimethoxysilane; epoxy silanes such as β-(3,4-epoxycyclohexyl)ethyltrimethoxysilane, γ-glycidoxypropyltrimethoxysilane, and γ-glycidoxypropyltriethoxysilane; vinyl silanes such as vinyltris(β-methoxyethoxy)silane, vinyltriethoxysilane, vinyltrimethoxysilane, and γ-methacryloxypropyltrimethoxysilane; hexamethyldisilazane, and γ-mercaptopropyltrimethoxysilane.

Examples of the titanate-based coupling agent include tetraisopropoxy titanium, tetra-n-butoxy titanium, butyl titanate dimer, tetrastearyl titanate, titanium acetylacetonate, titanium lactate, tetraoctylene glycol titanate, titanium lactate, and tetrastearoxytitanium.

Examples of the aluminum-based coupling agent include acetoalkoxyaluminum diisopropylate.

Examples of the epoxy resin include various epoxy resins such as generally commercially available epi-bis type, novolak type, β-methyl epichlo type, cyclic oxilane type, glycidyl ether type, glycidyl ester type, polyglycol ether type, glycol ether type, epoxidized fatty acid ester type, polycarboxylic acid ester type, aminoglycidyl type, and resorcin type epoxy resins, and compounds such as triglycidyl tris(2-hydroxyethyl)isocyanurate, neopentyl glycol diglycidyl ether, 1,6-hexanediol diglycidyl ether, acryl glycidyl ether, 2-ethylhexyl glycidyl ether, phenyl glycidyl ether, phenol glycidyl ether, p-t-butylphenyl glycidyl ether, diglycidyl adipate, o-diglycidyl phthalate, glycidyl methacrylate, and butyl glycidyl ether.

### (Other Additives)

The adhesive of the invention may include, in addition to the above-described components, a leveling agent, inorganic fine particles such as colloidal silica and alumina sol, organic fine particles based on polymethyl methacrylate, a defoaming agent, an antisagging agent, a wetting and dispersing agent, a viscosity adjustor, a UV absorber, a metal deactivating agent, a peroxide decomposer, a flame retardant, a reinforcing agent, a plasticizer, a lubricant, a rust inhibitor, a fluorescent brightener, an inorganic heat ray absorber, a flameproofing agent, an antistatic agent, a dehydrating agent, a known conventional thermoplastic elastomer, a tackifier, a phosphoric acid compound, a melamine resin, a reactive elastomer, and the like. The blending amount of these additives is appropriately adjusted in a range that desires for the adhesive of the invention are not impaired.

Examples of the plasticizer include a phthalic acid-based plasticizer, a fatty acid-based plasticizer, an aromatic polycarboxylic acid plasticizer, a phosphoric acid-based plasticizer, a polyol-based plasticizer, an epoxy-based plasticizer, a polyester-based plasticizer, and a carbonate-based plasticizer.

Examples of the phthalic acid-based plasticizer include phthalic acid ester-based plasticizers such as dimethylphthalate, diethylphthalate, dibutylphthalate, diisobutylphthalate, dihexylphthalate, diheptylphthalate, di-(2-ethylhexyl)phthalate, di-n-octylphthalate, dinonylphthalate, diisononylphthalate, didecylphthalate, diisodecylphthalate, ditridecylphthalate, diundecylphthalate, dilaurylphthalate, distearylphthalate, diphenylphthalate, dibenzylphthalate, butylbenzylphthalate, dicyclohexylphthalate, octyldecylphthalate, dimethylisophthalate, di-(2-ethylhexyl)isophthalate, and diisooctylisophthalate; and tetrahydrophtalic acid ester-based plasticizers such as di-(2-ethylhexyl)tetrahydrophthalate, di-n-octyltetrahydrophthalate, and diisodecyltetrahydrophthalate.

Examples of the fatty acid-based plasticizer include adipic acid-based plasticizers such as di-n-butyladipate, di-(2-ethylhexyl)adipate, diisodecyladipate, diisononyladipate, di(C6-C10 alkyl)adipate, and dibutyldiglycoladipate; azelaic acid-based plasticizers such as di-n-hexylazelate, di-(2-ethylhexyl)azelate, and diisooctylazelate; sebacic acid-based plasticizers such as di-n-butylsebacate, di-(2-ethylhexyl)sebacate, and diisononylsebacate; maleic acid-based plasticizers such as dimethylmalate, diethylmalate, di-n-butylmalate, and di-(2-ethylhexyl)malate; fumaric acid-based plasticizers such as di-n-butylfumarate and di-(2-ethylhexyl)fumarate; itaconic acid-based plasticizers such as monomethylitaconate, monobutylitaconate, dimethylitaconate, diethylitaconate, dibutylitaconate, and di-(2-ethylhexyl)itaconate; stearic acid-based plasticizers such as n-butylstearate, glycerinmonostearate, and diethylene glycol distearate; oleic acid-based plasticizers such as butyl oleate, glyceryl monooleate, and diethylene glycol monooleate; citric acid-based plasticizers such as triethyl citrate, tri-n-butyl citrate, acetyltriethyl citrate, acetyltributyl citrate, and acetyltri-(2-ethylhexyl)citrate; ricinoleic acid-based plasticizers such as methylacetyl ricinoleate, butylacetyl ricinoleate, glyceryl mono ricinoleate, and diethylene glycol mono ricinoleate; and other fatty acid-based plasticizers such as diethylene glycol monolaurate, diethylene glycol dipelargonate, and pentaerythritol fatty acid ester.

Examples of the aromatic polycarboxylic acid plasticizer include trimellitic acid-based plasticizers such as tri-n-hexyltrimellitate, tri-(2-ethylhexyl)trimellitate, tri-n-octyltrimellitate, triisooctyltrimellitate, triisononyltrimellitate, tridecyltrimellitate, and triisodecyltrimellitate; and pyromellitic acid-based plasticizers such as tetra-(2-ethylhexyl)pyromellitate and tetra-n-octyl pyromellitate.

Examples of the phosphoric acid-based plasticizer include triethyl phosphate, tributyl phosphate, tri-(2-ethylhexyl)phosphate, tributoxyethyl phosphate, triphenyl phosphate, octyldiphenyl phosphate, cresyl diphenyl phosphate, cresyl phenyl phosphate, tricresyl phosphate, trixylenyl phosphate, tris(chloroethyl)phosphate, tris(chloropropyl)phosphate, tris(dichloropropyl)phosphate, and tris(isopropylphenyl)phosphate.

Examples of the polyol-based plasticizer include glycol-based plasticizers such as diethylene glycol dibenzoate, dipropylene glycol dibenzoate, triethylene glycol dibenzoate, triethylene glycol di-(2-ethylbutyrate), triethylene glycol di-(2-ethylhexoate), and dibutylmethylenebisthioglycolate; and glycerin-based plasticizers such as glycerol monoacetate, glycerol triacetate, and glycerol tributyrate.

Examples of the epoxy-based plasticizer include epoxidized soybean oil, epoxy butyl stearate, di-2-ethylhexyl epoxyhexahydrophthalate, epoxy hexahydro diisodecyl phthalate, epoxy triglyceride, epoxidized octyl oleate, and epoxidized decyl oleate.

Examples of the polyester-based plasticizer include adipic acid-based polyesters, sebacic acid-based polyesters, and phthalic acid-based polyesters.

Examples of the carbonate-based plasticizer include propylene carbonate and ethylene carbonate.

Furthermore, examples of the plasticizer include, in addition, partially hydrogenated terphenyl, adhesive plasticizers, and further, polymerizable plasticizers such as diallyl phthalate, and acrylic monomer and oligomers. These plasticizers can be used singly or in combination of two or more kinds thereof.

### <Method for Producing Laminate>

A laminate of the invention can be obtained by a known method. The laminate is obtained, for example, by a method including a two-component mixing step of mixing the polyisocyanate composition (X) and the polyol composition (Y) in advance, applying the mixture to a first base material film, laminating a second base material film on the coating surface, and curing the adhesive layer to obtain a laminate, or a method including a two-component separate coating step of separately applying the polyisocyanate composition (X) and the polyol composition (Y) to a first base material film and a second base material film, bringing respective coating surfaces into contact with each other and performing pressure-bonding to laminate the first base material film and the second base material film, and curing the adhesive layer to obtain a laminate.

In particular, from the viewpoint of more easily securing the time until the polyol composition (Y) is wet and spread over the base material, the adhesive of the invention is preferably used in the method including a separate coating step. During the time until the polyisocyanate composition (X) and the polyol composition (Y) each are applied to different base materials and then the base materials are brought into contact with each other, the polyisocyanate composition (X) and the polyol composition (Y) can be sufficiently wet and spread over the base materials.

As another form of the two-component separate coating, it is also preferable that a mixture of the polyisocyanate composition (X) and the compound having a hydroxyl group is applied to one base material, the polyol composition (Y) is applied to the other base material, these base materials are laminated by bringing these coating surfaces into contact with each other and performing pressure-bonding, and the adhesive layer is cured. As the compound having a hydroxyl group to be mixed with the polyisocyanate composition (X), the compounds exemplified as the polyol (B) and the monool compound (D) can be used.

Examples of a preferred embodiment of the method for producing a laminate of the invention include a method in which the polyol composition (Y) is applied to an aluminum deposition layer of a base material having the aluminum deposition layer, the polyisocyanate composition (X) is applied to the other base material, and the polyisocyanate composition (X) and the polyol composition (Y) are brought into contact with each other and pressure-bonded. A solvent-free type adhesive is inferior in adhesiveness to the aluminum deposition layer in many cases, but by using the adhesive of the invention and employing the above-described method, adhesiveness between the adhesive layer and the aluminum deposition layer can be made favorable.

Examples of another preferred embodiment of the method for producing a laminate of the invention include a method in which the polyisocyanate composition (X) is applied to a printing layer of a base material having the printing layer, the polyol composition (Y) is applied to the other base material, and the polyisocyanate composition (X) and the polyol composition (Y) are brought into contact with each other and pressure-bonded. When the printing layer and the other base material are boned using the solvent-free type adhesive, the adhesive may dissolve the printing layer, which causes poor appearance in some cases. By employing the above-described method, the poor appearance of the laminate can be suppressed.

The pressure-bonding method is preferably a method of bonding using a pressure between rolls while passing through a space between two rolls (lamination rolls), the temperature of the lamination roll is preferably room temperature to about 80°C (practically 50°C, 80°C at most), and the pressure is preferably about 0.05 to 0.5 MPa. In this way, a laminate film can be obtained.

Even in any of the methods, when the two-component curable adhesive of the invention is used, the adhesive is cured at room temperature (20 to 25°C) or by heating, more specifically, 15 to 35°C for 12 to 72 hours after lamination, and practical physical properties are exhibited.

The coating amount of each of the polyisocyanate composition (X) and the polyol composition (Y) is preferably 0.3 to 3.0 g/m², and more preferably about 0.3 to 2.0 g/m².

### <Laminate>

The base material film used in a laminate and a packaging material which are produced using the two-component curable adhesive of the invention is preferably a plastic film usually used in a laminate film. Examples of the first base material film include base films or aluminum foils such as a polyethylene terephthalate (hereinafter, abbreviated as "PET") film, a nylon (hereinafter, abbreviated as "Ny") film, a biaxially stretched polypropylene (hereinafter, abbreviated as "OPP") film, and various deposition films. Furthermore, examples of the second base material film include sealant films such as an unstretched polypropylene (hereinafter, abbreviated as "CPP") film and a linear low-density polyethylene (hereinafter, abbreviated as "LLDPE") film. Furthermore, paper can also be used as the base material. Examples of the paper include natural paper and synthetic paper. A printing layer may be provided on the outer surface or inner surface of the base material layer and the paper layer, as necessary.

The laminate film obtained in this way can be industrially used as a packaging material in which a cleanser or a drug is filled, such as a soft packaging film or a soft packaging material (packaging of which the shape is formed by filling a content). Specific examples of use applications include, as a cleanser and a drug, laundry liquid detergents, dish liquid detergents, bath liquid detergents, bath liquid soaps, liquid shampoo, and liquid conditioner.

The packaging material produced using the two-component curable adhesive of the invention does not cause peeling of a laminate structure such as delamination not only during filling of contents such as cleansers, drugs, and the like but also after the elapse of time from the filling, and has excellent adhesiveness and content resistance.

Furthermore, those in which a printing ink is gravure-printed or flexographically printed on the first plastic film may be used, and even in this case, favorable laminate appearance can be exhibited. As the printing ink, a solvent-type, aqueous, or active energy ray-curable ink can be used.

When the two-component adhesive used in the invention is used, the adhesive is cured at room temperature or by heating for 12 to 72 hours after lamination, and practical physical properties are exhibited.

### <Packaging Material>

A packaging material of the invention is obtained by molding the laminate film in a bag shape, and specifically, the laminate film is heat-sealed to form a packaging material. Furthermore, in consideration of the use application and required performances (easy tearability and hand cuttability) as the packaging material, the rigidity and the durability (for example, impact resistance and pinhole resistance) required as the packaging material, and the like, as necessary, another layer can also be laminated. Usually, the packaging material is used with the base material layer, the paper layer, a second sealant layer, a non-woven fabric layer, and the like. As the method for laminating other layers, known methods can be used. For example, other layers may be laminated by disposing an adhesive layer in the interlayer space with the other layer, and by a dry lamination method, a heat lamination method, a heat-sealing method, an extrusion lamination method, or the like.

Specific examples of the laminate configuration include the base material layer/the adhesive layer/the first plastic film layer/the adhesive layer/the second plastic layer using the first plastic film layer/the adhesive layer/the second plastic layer or the first plastic layer as a barrier layer, which can be suitably used for, for example, common packaging materials, lid materials, and repacking containers, the second plastic layer/the paper layer/the adhesive layer/the first plastic film layer/the adhesive layer/the second plastic, the second plastic layer/the paper layer/the polyolefin resin layer/the base material layer/the first plastic layer/the adhesive layer/the second plastic layer, the paper layer/the first plastic film layer/the adhesive layer/the sealant layer, which can be suitably used for, for example, paper vessels and paper cups, and the second plastic layer/the adhesive layer/the first plastic layer/the adhesive layer/the second plastic layer, which can be suitably used for, for example, tubular containers. These laminates may have, as necessary, printing layers, top coating layers, or the like.

As the first plastic film layer, for example, films of polyester resins such as polyethylene terephthalate (PET), polyethylene naphthalate(PEN), and polylactic acid (PLA); films of polyolefin resins such as polypropylene; a polystyrene resin film; films of polyamides such as nylon 6 and poly-p-xylylene adipamide (MXD6 nylon); a polycarbonate resin film; a polyacrylonitrile resin film; a polyimide resin film; composite laminates of these (for example, nylon 6/MXD6/nylon 6, nylon 6/ethylene-vinyl alcohol copolymer/nylon 6), and mixtures of these are used. Among these, resin films having mechanical strength and dimensional stability are preferable. In particular, among these, optionally biaxially stretched films are preferably used.

Furthermore, in the first plastic film layer, in order to impart the barrier function, in addition to soft metal foils such as an aluminum foil, adoptable examples of the barrier layer include deposition layers such as aluminum deposition, silica deposition, alumina deposition, and silica-alumina binary deposition; and organic barrier layers made of a vinylidene chloride-based resin, modified polyvinyl alcohol, an ethylene-vinyl alcohol copolymer, MXD nylon, and the like.

As the second plastic film layer, conventionally known sealant resins can be used. Examples thereof include polyethylenes such as low-density polyethylene (LDPE), linear low-density polyethylene (LLDPE), and high-density polyethylene (HDPE); and polyolefin resins such as acid-modified polyethylene, polypropylene (PP), acid-modified polypropylene, copolymerized polypropylene, an ethylene-vinyl acetate copolymer, an ethylene-(meth)acrylic acid ester copolymer, an ethylene-(meth)acrylic acid copolymer, and ionomer. Among these, from the viewpoint of low-temperature sealing property, polyethylene-based resins are preferable, and because of being low in price, polyethylene is particularly preferable. The thickness of the sealant layer is not particularly limited, but in consideration of the processability into packaging materials and the heat-sealing property, the thickness of the sealant layer is preferably in a range of 10 to 60 µm and more preferably in a range of 15 to 40 µm. Furthermore, by providing the sealant layer with asperities having height differences of 5 to 20 µm, the sealant layer can be imparted with slippage and the tearability of packaging materials.

Examples of the paper layer include natural paper and synthetic paper. The first and second sealant layers can be formed using the same material as that of the sealant layer described above. A printing layer may be provided on the outer surface or inner surface of the base material layer and the paper layer, as necessary.

The "other layers" may include known additives and stabilizers, such as an antistatic agent, an easily adhesive coating agent, a plasticizer, a lubricant, and an antioxidant. Furthermore, the "other layers" may also be films whose surfaces are subjected to pretreatments such as a corona treatment, a plasma treatment, an ozone treatment, a chemical treatment, and a solvent treatment, for the purpose of improving the adhesiveness in the lamination with the other materials.

### <Packaging Material>

Examples of various embodiments of the packaging material of the invention include a three sided-sealed bag, a four sided-sealed bag, a gusset packaging bag, a pillow packaging bag, a gable top-type bottomed container, tetra classic, a brick type, a tubular container, a paper cup, and a lid material. Furthermore, the packaging material of the invention may be appropriately provided with easy-to-unseal treatment or a reseating means.

In recent years, a packaging material with a zipper that can be sealed again even when opened once has been widely used. A packaging body with a zipper is obtained by attaching, by heat-sealing, a zipper tape to a sealant film of a laminate in which a base material and a sealant film are bonded through an adhesive layer, and then heat-sealing a portion, which is the outer periphery of the packaging body, again. Therefore, a portion where the zipper tape edge and the outer periphery of the packaging body overlap with each other is subjected to a heat-sealing process twice. Further, the laminate is transformed by interposing the zipper tape, and a load is also applied to the adhesive layer. From these reasons, peeling is likely to occur in the interlayer space between the base material and the adhesive layer or the adhesive layer and the sealant film.

Examples of the configuration of the laminate suitable for the packaging material with a zipper include:
configuration 1: the OPP film/the adhesive layer/the CPP film;
configuration 2: the Ny film/the adhesive layer/the LLDPE film;
configuration 3: the PET film/the adhesive layer/the CPP film;
configuration 4: the PET film/the adhesive layer/the aluminum deposition PET film/the adhesive layer/the LLDPE film; and
configuration 5: the PET film/the adhesive layer/the aluminum deposition CPP film, and
the above-described problems are significantly observed in the interlayer space between the PET film and the adhesive of the configuration 3 or the interlayer space between the aluminum deposition layer and the adhesive layer of the configurations 4 and 5, particularly, the interlayer space between the aluminum deposition layer and the adhesive layer. Generally, it is known that the solvent-free type adhesive is inferior in adhesiveness to the aluminum deposition layer, but since the adhesive of the invention is excellent in adhesiveness to a base material, peeling is less likely to occur in the interlayer space therebetween, and the adhesive of the invention can also be suitably used in packaging materials produced under severe conditions, such as a packaging material with a zipper. It is needless to say that the adhesive of the invention is also suitable for laminates or packaging materials having other configurations.

The packaging material of the invention can be industrially used as a packaging material in which food, a cleanser, or a drug is mainly filled. Specific examples of use applications include, as a cleanser and a drug, laundry liquid detergents, dish liquid detergents, bath liquid detergents, bath liquid soaps, liquid shampoo, liquid conditioner, and pharmaceutical tablets. Furthermore, the packaging material of the invention can also be used for a secondary packaging material packaging the above-described containers. In particular, since the two-component adhesive is used, the packaging material of the invention can be suitably used as packaging materials for foods and drugs which have a problem of elution.

### EXAMPLES

Hereinafter, the invention will be more specifically described with reference to specific Synthetic Examples and Examples; however, the invention is not limited to these Examples. Note that, in the following examples, "part(s)" and "%" each represent "part(s) by mass" and "% by mass" unless otherwise specified.

### <Synthesis of Polyisocyanate Composition (X)>

### (Polyisocyanate Composition (X-1))

36 parts of 4,4-diphenylmethane diisocyanate and 19 parts of 2,4'-diphenylmethane diisocyanate in a flask equipped with a stirrer, a thermometer, and a nitrogen gas introduction tube were put into a reaction container, stirred under nitrogen gas, and heated to 60°C. 11 parts of polypropylene glycol (hereinafter, abbreviated as "PPG") having a number average molecular weight of 400, 22 parts of PPG having a number average molecular weight of 1000, and 11 parts of PPG having a number average molecular weight of 2000 were added dropwise in several portions and stirred for 5 to 6 hours to complete the urethane formation reaction. The NCO group content ratio of the obtained polyisocyanate was 13.5%, and the viscosity at 50°C was 700 mPa.s. This polyisocyanate was used as a polyisocyanate composition (X-1).

### (Polyisocyanate Composition (X-2))

Into a polyester reaction container equipped with a stirrer, a nitrogen gas introduction tube, a snyder tube, and a condenser, 92.00 parts of ethylene glycol, 118.50 parts of phthalic anhydride, 29.23 parts of adipic acid, and 0.01 parts of titanium tetraisopropoxide were charged, heating was performed gradually such that a rectifying tube upper portion temperature did not exceed 100°C, and the internal temperature was held at 220°C. When the acid value reached 1 mgKOH/g or less, the esterification reaction was completed, a polyester intermediate B1' having a number average molecular weight of 500 was obtained.

Into a reaction container equipped with a stirrer, a nitrogen gas introduction tube, a snyder tube, a cooling condenser, and a dropping funnel, 71.45 parts of xylylene diisocyanate and 46.26 parts of Millionate MN (a mixture of 4,4'-diphenylmethane diisocyanate and 2,4'-diphenylmethane diisocyanate) were put and stirred while being heated to 70°C, 92.28 parts of the polyester intermediate B1' was added dropwise over 2 hours using the dropping funnel, and stirring was further performed for 4 hours, thereby obtaining a polyisocyanate composition (X-2). NCO% was 15.1% and the viscosity at 50°C was 2900 mPa.s.

### <Preparation of Polyol Composition (Y)>

Polyol compositions (Y-1) to (Y-11) and (Y'-1) to (Y'-5) were prepared according to the blending shown in Tables 1 and 2. The viscosity in the table is measured at 50°C, and the unit is mPa·s. The unit of the amine value is mgKOH/g. The details of the compounds in the table are as described below.
Polyol (B-1): castor oil
Polyol (B-2): polypropylene glycol (Mw = 1000)
Polyol (B-3): polypropylene glycol (Mw = 400)
Polyol (B-4): polypropylene triol (Mw = 3000)
Polyol (B-5): polypropylene glycol (Mw = 4000)
Polyol (B-6): polyether polyurethane polyol (manufactured by DIC Corporation, HA-380B)
Polyol (B-7): polyester diol (manufactured by DIC Corporation, ODX-2376)
Polyol (B-8): polyester diol (manufactured by DIC Corporation, HA-700B)
Polyol (B-9): polyester diol (the above-described polyester intermediate B1')

Amine compound (C2-1): trimethylolpropane poly(oxypropylene)triamine (Mw = 400, amine value = 355 mgKOH/g)
Monool compound (D-1): polypropylene glycol monomethyl ether (Mw = 400)
Catalyst (E1-1): dibutyltin dilaurate (DBTDL)
Catalyst (E1-2): bismuth neodecanoate
Catalyst (E1-3): zinc neodecanoate
Catalyst (E2-1): ε-caprolactam
Defoaming agent: manufactured by Evonik Industries AG., SURFYNOL 440

**[Table 1]**

| | Y-1 | Y-2 | Y-3 | Y-4 | Y-5 | Y-6 | Y-7 |
|---|---|---|---|---|---|---|---|
| Polyol (B-1) | 99.90 | | | 69.90 | 54.90 | 46.00 | |
| Polyol (B-2) | | | 60.00 | 20.00 | | | 83.00 |
| Polyol (B-3) | | | | | 45.00 | 40.00 | |
| Polyol (B-4) | | 99.90 | | | | | |
| Polyol (B-5) | | | | | | | |
| Polyol (B-6) | | | | | | | |
| Polyol (B-7) | | | | | | | |
| Polyol (B-8) | | | 29.90 | | | | 4.50 |
| Polyol (B-9) | | | | | | | |
| Amine compound (C2-1) | | | 10.00 | 10.00 | | 8.00 | 12.00 |
| Monool compound (D-1) | | | | | | | |
| Catalyst (E1-1) | 0.10 | 0.10 | 0.10 | 0.10 | 0.10 | | |
| Catalyst (E1-2) | | | | | | 1.00 | 0.50 |
| Catalyst (E1-3) | | | | | | | |
| Catalyst (E2-1) | | | | | | | |
| Defoaming agent | | | | | | 5.00 | |
| Total | 100.00 | 100.00 | 100.00 | 100.00 | 100.00 | 100.00 | 100.00 |
| Viscosity | 132 | 131 | 131 | 108 | 55 | 52 | 60 |
| Amine value | 0.0 | 0.0 | 35.7 | 35.7 | 0.0 | 28.6 | 42.8 |

**[Table 2]**

| | Y-8 | Y-9 | Y-10 | Y-11 |
|---|---|---|---|---|
| Polyol (B-1) | | | | |
| Polyol (B-2) | | 15.00 | | |
| Polyol (B-3) | | 79.90 | 27.00 | 27.00 |
| Polyol (B-4) | | | | |
| Polyol (B-5) | | | | |
| Polyol (B-6) | | | | |
| Polyol (B-7) | 50.00 | | | |
| Polyol (B-8) | | | | |
| Polyol (B-9) | | | 33.00 | 32.00 |
| Amine compound (C2-1) | 12.00 | 5.00 | 20.00 | 20.00 |
| Monool compound (D-1) | 37.00 | | 20.00 | 20.00 |
| Catalyst (E1-1) | | 0.10 | | |
| Catalyst (E1-2) | 0.50 | | | |
| Catalyst (E1-3) | 0.50 | | | 0.5 |
| Catalyst (E2-1) | | | | 0.5 |
| Defoaming agent | | | | |
| Total | 100.00 | 100.00 | 100 | 100 |
| Viscosity | 63 | 24 | 94 | 93 |
| Amine value | 42.8 | 17.9 | 71.4 | 70.0 |

**[Table 3]**

| | Y'-1 | Y'-2 | Y'-3 | Y'-4 | Y'-5 |
|---|---|---|---|---|---|
| Polyol (B-1) | | | 20.00 | 30.00 | |
| Polyol (B-2) | | | | | |
| Polyol (B-3) | | | | | 69.90 |
| Polyol (B-4) | | | | | |
| Polyol (B-5) | | | 79.90 | 59.90 | |
| Polyol (B-6) | | 99.90 | | | |
| Polyol (B-7) | | | | | |
| Polyol (B-8) | 99.90 | | | | |
| Polyol (B-9) | | | | | |
| Amine compound (C2-1) | | | | 10.00 | 10.00 |
| Monool compound (D-1) | | | | | 20.00 |
| Catalyst (E1-1) | 0.10 | 0.10 | 0.10 | 0.10 | 0.10 |
| Catalyst (E1-2) | | | | | |
| Catalyst (E1-3) | | | | | |
| Catalyst (E2-1) | | | | | |
| Defoaming agent | | | | | |
| Total | 100.00 | 100.00 | 100.00 | 100.00 | 100.00 |
| Viscosity | 1797 | 580 | 196 | 186 | 17 |
| Amine value | 0.0 | 0.0 | 0.0 | 35.7 | 35.7 |

### <Production of Evaluation Samples 1 and 2>

### (Example 1)

The polyisocyanate composition (X-1) was applied to a polyester film (PET, E5100 manufactured by TOYOBO CO., LTD., 12 µm), the polyol composition (Y-1) was applied to an aluminum deposition surface of an aluminum deposition polyester film (VMPET, 1310 manufactured by TORAY ADVANCED FILM Co., Ltd., 12 µm), and the PET and the VMPET were pressure-bonded by a nip roll (50°C), thereby obtaining a laminate 1 of the PET/the adhesive layer/the VMPET. The coating amounts of the polyisocyanate composition (X-1) and the polyol composition (Y-1) were 1.3 g/m² and 0.7 g/m², respectively.

Subsequently, the polyisocyanate composition (X-1) was applied to the VMPET of the laminate 1, the polyol composition (Y-1) was applied to an LLDPE film (TUX-HC manufactured by Mitsui Chemicals Tohcello, Inc., 60 µm), these films were pressure-bonded by a nip roll (50°C), and then aging was performed at 25°C for 12 hours, thereby obtaining a laminate 2 of the PET/the adhesive layer/the VMPET/the adhesive layer/the LLDPE. The coating amounts of the polyisocyanate composition (X-1) and the polyol composition (Y-1) were the same as described above.

A laminate 3 was obtained in the same manner as in the laminate 2, except that the aging time was set to 24 hours.

The laminate 2 was cut into two pieces in 10 cm × 10 cm (to be used as laminates 2'). The LLDPE films of the laminates 2' faced each other, a zipper tape was interposed between one sides, and four sides of the laminates 2' were thermally fused by heat-sealing (200°C, 0.1 MPa, 1 second), thereby producing an evaluation sample 1. Furthermore, an evaluation sample 2 was produced by the same method, except that the laminate 3 was used. Five bags of each of the evaluation samples 1 and 2 were produced and evaluated by a method described below.

### <Production of Evaluation Sample 3>

### (Example 1)

The polyisocyanate composition (X-1) was applied to a polyamide film (Ny, manufactured by UNITIKA LTD., ON, 15 µm), the polyol composition (Y-1) was applied to an aluminum deposition surface of an aluminum deposition polyester film (VMPET, 1310 manufactured by TORAY ADVANCED FILM Co., Ltd., 12 µm), and the Ny and the VMPET were pressure-bonded by a nip roll (50°C), thereby obtaining a laminate 4 of the Ny/the adhesive layer/the VMPET. The coating amounts of the polyisocyanate composition (X-1) and the polyol composition (Y-1) were 1.3 g/m² and 0.7 g/m², respectively.

Subsequently, the polyisocyanate composition (X-1) was applied to the VMPET side of the laminate 4, the polyol composition (Y-1) was applied to an LLDPE film (TUX-MCS manufactured by Mitsui Chemicals Tohcello, Inc., 130 µm), these films were pressure-bonded by a nip roll (50°C), and then aging was performed at 40°C for 48 hours, thereby obtaining a laminate 5 of the Ny/the adhesive layer/the VMPET/the adhesive layer/the LLDPE. The coating amounts of the polyisocyanate composition (X-1) and the polyol composition (Y-1) were the same as described above.

The laminate 5 was cut into 10 cm × 10 cm (to be used as laminates 5'). The LLDPE films of the laminates 5' faced each other, and one sides of the laminates 5' were thermally fused by heat-sealing (200°C, 0.1 MPa, 1 second) and cut into a width of 15 mm, thereby producing an evaluation sample 3.

### (Example 2) to (Example 11), and (Comparative Example 1) to (Comparative Example 5)

Evaluation samples 1 to 3 of Examples and Comparative Examples were obtained in the same manner as in Example 1, except that the polyisocyanate composition (X) and the polyol composition (Y) to be used and the coating amounts thereof were changed as shown in Tables 4 to 7.

**[Table 4]**

| | Example 1 | Example 2 | Example 3 | Example 4 | Example 5 |
|---|---|---|---|---|---|
| Polyisocyanate composition | X-1 | X-1 | X-1 | X-1 | X-1 |
| Polyol composition | Y-1 | Y-2 | Y-3 | Y-4 | Y-5 |
| Coating amount (g/m²) of polyisocyanate composition | 1.3 | 0.8 | 1.2 | 1.3 | 1.3 |
| Coating amount (g/m²) of polyol composition | 0.7 | 1.2 | 0.8 | 0.7 | 0.7 |

**[Table 5]**

| | Example 6 | Example 7 | Example 8 | Example 9 |
|---|---|---|---|---|
| Polyisocyanate composition | X-1 | X-1 | X-1 | X-1 |
| Polyol composition | Y-6 | Y-7 | Y-8 | Y-9 |
| Coating amount (g/m²) of polyisocyanate composition | 1.4 | 1.2 | 1.3 | 1.5 |
| Coating amount (g/m²) of polyol composition | 0.6 | 0.8 | 0.7 | 0.5 |

**[Table 6]**

| | Example 10 | Example 11 |
|---|---|---|
| Polyisocyanate composition | X-2 | X-2 |
| Polyol composition | Y-10 | Y-11 |
| Coating amount (g/m²) of polyisocyanate composition | 1.3 | 1.3 |
| Coating amount (g/m²) of polyol composition | 0.7 | 0.7 |

**[Table 7]**

| | Comparative Example 1 | Comparative Example 2 | Comparative Example 3 | Comparative Example 4 | Comparative Example 5 |
|---|---|---|---|---|---|
| Polyisocyanate composition | X-1 | X-1 | X-1 | X-1 | X-1 |
| Polyol composition | Y'-1 | Y'-2 | Y'-3 | Y'-4 | Y'-5 |
| Coating amount (g/m²) of polyisocyanate composition | 1.1 | 1.0 | 1.0 | 1.1 | 1.5 |
| Coating amount (g/m²) of polyol composition | 0.9 | 1.0 | 1.0 | 0.9 | 0.5 |

### <Evaluation>

### (Zipper Sealability)

The presence/absence of peeling between the aluminum deposition layer and the adhesive layer at a portion where the zipper tape edge of the evaluation sample 1 and the heat seal overlapped with each other was examined and evaluated as follows on a five-score rating criterion. The evaluation sample 2 was also evaluated in the same manner, and the results were collectively shown in Tables 8 to 10.
5: There was no peeling in all 20 places.
4: The peeling occurred in one place out of 20 places.
3: The peeling occurred in 2 to 3 places out of 20 places.
2: The peeling occurred in 4 to 8 places out of 20 places.
1: The peeling occurred in 9 or more places out of 20 places.

### (Heat-Seal Strength)

Both ends of the film of the evaluation sample 3 were fixed to a tensile tester, and the strength was measured in a tensile mode (tension rate: 300 mm/min). The measurement was performed five times under the same conditions. Evaluation was performed on a five-score rating criterion according to an average value of the obtained strength maximum values.
5: The average value of the maximum strength was 100 N or more.
4: The average value of the maximum strength was 80 N or more and less than 100 N.
3: The average value of the maximum strength was 70 N or more and less than 80 N.
2: The average value of the maximum strength was 60 N or more and less than 70 N.
1: The average value of the maximum strength was less than 60 N.

**[Table 8]**

| | Example 1 | Example 2 | Example 3 | Example 4 | Example 5 |
|---|---|---|---|---|---|
| Zipper portion sealability (after 12 hours) | 2 | 3 | 4 | 4 | 4 |
| Zipper portion sealability (after 24 hours) | 3 | 4 | 4 | 4 | 5 |
| Seal strength | 3 | 3 | 3 | 3 | 4 |

**[Table 9]**

| | Example 6 | Example 7 | Example 8 | Example 9 | Example 10 | Example 11 |
|---|---|---|---|---|---|---|
| Zipper portion sealability (after 12 hours) | 5 | 5 | 5 | 3 | 4 | 5 |
| Zipper portion sealability (after 24 hours) | 5 | 5 | 5 | 3 | 5 | 5 |
| Seal strength | 3 | 3 | 4 | 3 | 5 | 5 |

**[Table 10]**

| | Comparative Example 1 | Comparative Example 2 | Comparative Example 3 | Comparative Example 4 | Comparative Example 5 |
|---|---|---|---|---|---|
| Zipper portion sealability (after 12 hours) | 1 | 1 | 1 | 2 | 2 |
| Zipper portion sealability (after 24 hours) | 2 | 2 | 2 | 2 | 2 |
| Seal strength | 1 | 1 | 1 | 2 | 2 |

As clearly shown from Examples 1 to 11, the adhesive of the invention is excellent in base material adhesiveness even when aged at room temperature. On the other hand, in the adhesives of Comparative Examples 1 to 5, adhesiveness enough to apply the adhesive to a packaging material with a zipper was not obtainable.

## Claims

1. A two-component curable adhesive comprising:
a polyisocyanate composition (X) including a polyisocyanate compound (A); and
a polyol composition (Y) including a polyol (B), wherein
a viscosity of the polyol composition at 50°C is 20 mPa·s or more and 180 mPa·s or less.

2. The two-component curable adhesive according to claim 1, wherein the polyol composition includes an amine compound (C).

3. The two-component curable adhesive according to claim 2, wherein an amine value of the polyol composition is 1 mgKOH/g or more and 100 mgKOH/g or less.

4. The two-component curable adhesive according to claim 2 or 3, wherein the amine compound (C) includes an amine compound (C1) having a plurality of hydroxyl groups.

5. The two-component curable adhesive according to any one of claims 2 to 4, wherein the amine compound (C) includes an amine compound (C2) having an amino group.

6. The two-component curable adhesive according to any one of claims 2 to 5, wherein the amine compound (C) includes a tertiary amine compound (C3) having no active hydrogen group.

7. The two-component curable adhesive according to any one of claims 1 to 6, wherein the polyol composition (Y) includes a monool compound (D).

8. The two-component curable adhesive according to any one of claims 1 to 8, comprising a catalyst (E).

9. The two-component curable adhesive according to any one of claims 1 to 8, wherein a viscosity of the polyisocyanate composition at 50°C is 200 mPa s or more and 3000 mPa·s or less.

10. A method for producing a laminate, the method comprising:
a step of applying a polyisocyanate composition (X) including a polyisocyanate compound (A) to a first base material;
a step of applying a polyol composition (Y) including a polyol (B) and having a viscosity at 50°C of 20 mPa·s or more and 180 mPa·s or less to a second base material; and
a step of bonding the first base material and the second base material such that the polyisocyanate composition (X) and the polyol composition (Y) are in contact with each other.

11. A laminate comprising: a first base material; a second base material; and an adhesive layer bonding the first base material and the second base material, the adhesive layer being a cured coating film of the two-component curable adhesive according to any one of claims 1 to 9.

12. A packaging material comprising the laminate according to claim 11.
